(19) Europäisches Patentamt
European Patent Office
Office européen des brevets

(11) EP 1 017 623 B1

(12) **EUROPÄISCHE PATENTSCHRIFT**

(45) Veröffentlichungstag und Bekanntmachung des Hinweises auf die Patenterteilung:
**16.01.2002 Patentblatt 2002/03**

(21) Anmeldenummer: **98948930.7**

(22) Anmeldetag: **08.09.1998**

(51) Int Cl.⁷: **C01B 31/28**

(86) Internationale Anmeldenummer:
**PCT/EP98/05693**

(87) Internationale Veröffentlichungsnummer:
**WO 99/14159 (25.03.1999 Gazette 1999/12)**

(54) **VERFAHREN UND VORRICHTUNG ZUR HERSTELLUNG VON PHOSGEN AUS DIPHOSGEN UND/ODER TRIPHOSGEN**

METHOD AND DEVICE FOR PREPARING PHOSGENE FROM DIPHOSGENE AND/OR TRIPHOSGENE

PROCEDE ET DISPOSITIF PERMETTANT DE PREPARER DU PHOSGENE A PARTIR DE DIPHOSGENE ET/OU DE TRIPHOSGENE

(84) Benannte Vertragsstaaten:
**AT BE CH DE DK ES FI FR GB GR IE IT LI LU NL PT SE**
Benannte Erstreckungsstaaten:
**LT RO SI**

(30) Priorität: **15.09.1997 DE 19740577**

(43) Veröffentlichungstag der Anmeldung:
**12.07.2000 Patentblatt 2000/28**

(73) Patentinhaber: **Dr. Eckert GmbH**
**80809 München (DE)**

(72) Erfinder:
- **ECKERT, Heiner**
**D-80809 München (DE)**
- **GRUBER, Bernhard**
**D-85368 Moosburg (DE)**
- **DIRSCH, Norbert**
**D-85135 Emsing (DE)**

(74) Vertreter: **Kindler, Matthias, Dr. Dipl.-Chem.**
**Hoffmann Eitle, Patent- und Rechtsanwälte,**
**Arabellastrasse 4**
**81925 München (DE)**

(56) Entgegenhaltungen:
- **L. COTARCA ET AL: "Bis(trichloromethyl) Carbonate in Organic Synthesis" SYNTHESIS,1996, Seiten 553-576, XP002090854 in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 017 623 B1

Printed by Jouve, 75001 PARIS (FR)

## Beschreibung

Die vorliegende Erfindung betrifft ein Verfahren zur Herstellung von Phosgen aus Diphosgen und/oder Triphosgen durch Umsetzung an einem Katalysator sowie die Verwendung einer Vorrichtung zur Durchführung des Verfahrens.

Phosgen wird in industriellem Maßstab als wichtige Ausgangsverbindung unter anderem für die Herstellung von Diisocyanaten und Polycarbonaten verwendet. Wegen seiner hohen Toxizität einerseits und der dadurch bedingten, stark restriktiven gesetzlichen Sicherheitsbestimmungen bezüglich Transport, Lagerung und Verwendung andererseits ist ein Bedarf an Phosgen-Ersatzstoffen entstanden. Dieser Bedarf wird durch das bei Standardbedingungen flüssige Diphosgen (Trichlormethylchloroformiat) und das kristalline Triphosgen (Bis(trichlormethyl)carbonat) gedeckt [H. Eckert, B. Forster, Angew. Chem., 99 (1987) 922-23; Angew. Chem. Int. Ed. Engl., 26 (1987) 894-95; F. Bracher, T. Litz, J. Prakt. Chem., 337 (1995) 516-18; L. Cotarca, P. Delogu, A. Nardelli, V. Sunjic, Synthesis, (1996) 553-76].

In der Praxis hat sich herausgestellt, daß es nach wie vor vorteilhaft ist, gasförmiges Phosgen in chemischen Produktionsprozessen zu verwenden. Gründe dafür sind zum einen, daß bekannte Verfahren mit den vorhandenen Anlagen betrieben werden können, zum anderen, daß häufig mit einem Phosgenüberschuß gearbeitet werden muß, der nach der Reaktion wieder entfernt werden muß. Die im letzten Fall genannte Abtrennung des Phosgenüberschusses gestaltet sich jedoch bei den schwerer flüchtigen Phosgenersatzstoffen oftmals als schwierig, während das gasförmige Phosgen leicht entfernt werden kann [J.S. Nowick et al., J. Org. Chem., 61 (1996) 3929]. Aufgrund der oben genannten gesetzlichen Sicherheitsbestimmungen ist jedoch Phosgen als solches nicht mehr im Handel verfügbar. Daher besteht ein Bedarf an einem gefahrlosen Herstellungsverfahren von reinem Phosgen unmittelbar vor seinem Einsatz in der Reaktion aus stabilen Vorstufen, wie den Ersatzstoffen Diphosgen und insbesondere Triphosgen, durch deren kontrollierte und steuerbare Umsetzung zu Phosgen.

Eine solche Umsetzung von Diphosgen und Triphosgen an Umsetzungskatalysatoren ist bereits bekannt, jedoch treten mit den bekannten Umsetzungskatalysatoren schwerwiegende Nachteile auf: So wird Triphosgen an Metallsalzen mit starken Lewissäure-Eigenschaften, wie Aluminiumchlorid oder Eisenchlorid, gemäß der folgenden Gleichung stöchiometrisch zu Phosgen, Kohlendioxid und Tetrachlorkohlenstoff umgesetzt [L. Cotarca, Synthesis, (1996) 556]:

$$Cl_3C\text{-}O\text{-}CO\text{-}O\text{-}CCl_3 \rightarrow COCl_2 + CO_2 + CCl_4$$

Somit beträgt in diesem Fall die Ausbeute an Phosgen nur ein Drittel des theoretisch möglichen Wertes. Zudem können die entstandenen Nebenprodukte in Folgereaktionen des Phosgens stören, und die Umsetzungsreaktion verläuft in hohem Maße unkontrollierbar. Andererseits ist Triphosgen gegenüber schwächeren Lewissäuren, wie Titanocendichlorid und Zirconocendichlorid, vollkommen stabil.

Auch an Aktivkohle kann Triphosgen zu Phosgen umgesetzt werden. Obwohl hier die Umsetzung annähernd quantitativ verläuft, ist die Reaktion unkontrollierbar und kann sogar einen explosionsartigen Charakter annehmen.

Auch an Lewisbasen wie Pyridin lassen sich Diphosgen und Triphosgen zu Phosgen umsetzen, jedoch ist auch in diesem Fall die extrem schnelle Umsetzungsreaktion nicht steuerbar.

Vor dem Hintergrund der oben genannten Nachteile der bekannten Verfahren zur Umsetzung von Diphosgen und Triphosgen zu Phosgen besteht das Problem der vorliegenden Erfindung deshalb darin, ein Verfahren zur steuerbaren und im wesentlichen quantitativen Herstellung von Phosgen aus Diphosgen und/oder Triphosgen zur Verfügung zu stellen.

Es wurde überraschend gefunden, daß dieses Problem gelöst werden kann, indem Diphosgen und/oder Triphosgen an einem Katalysator, der eine oder mehrere Verbindungen mit ein oder mehreren Stickstoffatomen mit desaktiviertem freien Elektronenpaar umfaßt, zu Phosgen umgesetzt werden. Triphosgen kann sowohl in der oben genannten Form (Bis(trichlormethyl)carbonat) als auch in der durch die folgende Formel angegebenen, cyclischen Form eingesetzt werden:

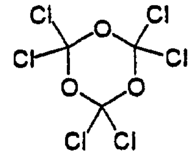

In einer bevorzugten Ausführungsform erfolgt die Desaktivierung des freien Elektronenpaars des Stickstoffatoms durch Mesomerie und/oder ein oder mehrere elektronenziehende und/oder raumfüllende Gruppen in Nachbarschaft zum Stickstoffatom. Der Begriff 'in Nachbarschaft' bedeutet insbesondere 'in α-, β- oder γ-Stellung' zum Stickstoffatom mit desaktiviertem freien Elektronenpaar, besonders bevorzugt 'in α-Stellung'.

Bevorzugte Beispiele für Verbindungen mit Stickstoffatom mit desaktiviertem freien Elektronenpaar sind Verbindungen mit desaktivierter Imin- und/oder desaktivierter Amin-Funktion.

In einer bevorzugten Ausführungsform sind sie durch Bindung an Polymere, wie Polyacrylsäure oder Polystyrol, immobilisiert. Die immobilisierten Verbindungen mit desaktivierter Imin- und/oder Amin-Funktion sind gegebenenfalls über Abstandsmoleküle (sogenannte 'Spacer') mit der Polymerkette verbunden. Beispiele für solche Spacer sind Alkoxygruppen, wie Triethyleneglykol, Tetraethylenglykol und Polyethylenglykolgruppen.

Verbindungen mit desaktivierter Imin-Funktion sind beispielsweise höhere aromatische oder heteroaromatische Systeme sowie Verbindungen mit Alkylgruppen in Nachbarschaft zum Stickstoffatom. Bevorzugte Verbindungen mit desaktivierter Imin-Funktion, die im erfindungsgemäßen Verfahren verwendet werden können, sind Poly-(2-vinylpyridin), Phenanthridin sowie Phthalocyanin ($H_2Pc$) und Metallphthalocyanine (MePc), deren Grundgerüst nachfolgend dargestellt ist:

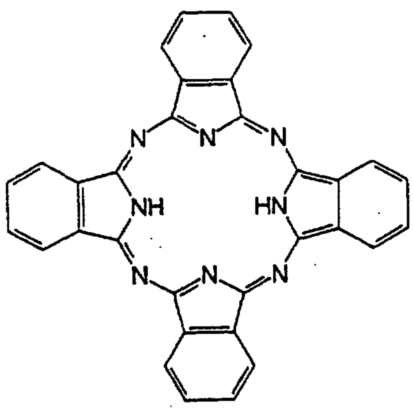

$H_2Pc$

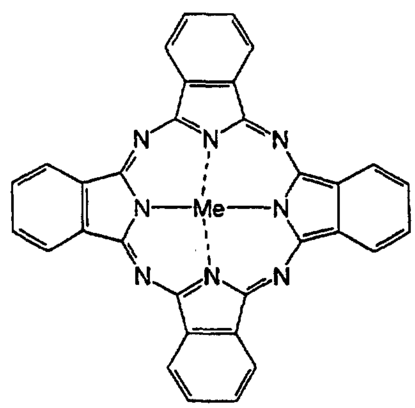

MePc

Als Metallatome des Metallphthalocyanins werden bevorzugt die Nebengruppenmetalle der 4. bis 6. Periode sowie die Metalle der 3. bis 6. Periode der Hauptgruppen 2 bis 5 und besonders bevorzugt die Nebengruppenmetalle der 4. Periode (Sc, Ti, V, Cr, Mn, Fe, Co, Ni, Cu, Zn) verwendet.

Die Metallatome des Metallphthalocyanins können, insbesondere im Fall von Nebengruppenmetallen, mit einem oder mehreren zusätzlichen Liganden, wie Chloro oder Oxo, komplexiert sein. Das Phthalocyanin bzw. die Metallphthalocyanine können in beliebigen Kristallmodifikationen verwendet werden. Beispiele für solche Kristallmodifikationen von Metallphthalocyaninen sind α-CuPc und β-CuPc.

Die oben genannten bevorzugten Verbindungen mit desaktivierter Imin-Funktion können gegebenenfalls am Kohlenstoffgerüst substituiert sein. Die Substituenten schließen Alkyl, Cycloalkyl, Aryl, Halogen, Nitro, Amino, Cyano, Carboxy, Carbalkoxy, Carboxamido sowie heterocyclische Gruppen ein.

In einer bevorzugten Ausführungsform können das Phthalocyanin oder die Metallphthalocyanine an den Benzo-Gruppen unabhängig voneinander ein- oder mehrfach substituiert sein, wobei die Substituenten bevorzugt aus den oben genannten Substituenten sowie weiteren Phthalocyaninen und anellierten cyclischen oder heterocyclischen Verbindungen, die gegebenenfalls selbst substituiert sind, ausgewählt sind.

Die Verbindungen mit desaktivierter Amin-Funktion sind bevorzugt ausgewählt aus desaktivierten tertiären Aminverbindungen. Die Desaktivierung erfolgt in bevorzugter Weise durch Immobilisierung durch Bindung der Aminverbindung an Polymere, wobei insbesondere tertiäre Alkylamine bevorzugt sind und die Alkylgruppen gleich oder verschieden sind und ausgewählt sind aus Methyl, Ethyl, Propyl und höheren linearen oder verzweigten Alkylgruppen. Ein Beispiel für einen erfindungsgemäßen Katalysator mit desaktivierter tertiärer Amin-Funktion ist N,N-Dimethylaminomethylpolystyrol.

Der Katalysator zur Umsetzung von Diphosgen und/oder Triphosgen wird bevorzugt in einer Konzentration von 0.01 bis 10 mol%, besonders bevorzugt von 0.1 bis 2 mol%, bezogen auf die Menge an Diphosgen und/oder Triphosgen, verwendet. Ist der Katalysator ein durch Bindung einer Verbindung mit Stickstoffatom mit desaktiviertem freien Elektronenpaar an ein Polymer immobilisierter Katalysator, so berechnet sich die Konzentration aufgrund der

Stoffmenge (in Mol) der an die Polymerkette gebundenen Verbindungen mit desaktiviertem freiem Elektronenpaar.

In einer bevorzugten Ausführungsform des Verfahrens wird dieses mit Diphosgen und/oder Triphosgen im flüssigen Zustand durchgeführt. Die Umsetzungstemperatur beträgt bevorzugt 80 bis 150°C, besonders bevorzugt 90 bis 130°C, und am meisten bevorzugt 100 bis 125°C.

Obwohl das erfindungsgemäße Verfahren ohne Lösungsmittel durchgeführt werden kann, ist es ebenso möglich, ein inertes Lösungsmittel in der Umsetzung von Diphosgen und/oder Triphosgen zu verwenden.

Die vorliegende Erfindung stellt ebenfalls die Verwendung einer Vorrichtung zur Durchführung des erfindungsgemäßen Verfahrens zur Verfügung, welche einen Vorratsbehälter für Diphosgen und/oder Triphosgen und eine mit dem Vorratsbehälter verbundene und den Katalysator enthaltende Reaktionskammer mit Phosgenauslaß umfaßt.

In einer bevorzugten Ausführungsform ist die Reaktionskammer mit einer gegebenenfalls elektronisch regelbaren Heizung ausgestattet. Diese Heizung kann verwendet werden, um vom Vorratsbehälter in die Reaktionskammer transportiertes Reaktionsmaterial gegebenenfalls aufzuschmelzen und/oder die Umsetzungsreaktion durch eine erhöhte Temperatur zu beschleunigen.

Es ist bevorzugt, die Reaktionskammer mit einer trichterförmig in die Reaktionskammer mündenden Rücklaufeinrichtung zu versehen. Auf diese Weise kann verdampftes oder mitgeschlepptes Diphosgen und/oder Triphosgen in der Reaktionskammer kondensiert werden und in das Reaktionssystem zurückgeführt werden. In einer bevorzugten Ausführungsform besteht die Rücklaufeinrichtung aus einem Rückflußkühler mit außerhalb der Vorrichtung angebrachtem Wärmetauscher oder aus geneigten Prallblechen. Die Prallbleche bestehen bevorzugt aus beschichteten Metallblechen. Die Beschichtung kann z.B. aus einem geeigneten inerten Kunststoff, wie Polytetrafluorethylen oder Perfluoralkoxypolymer, oder Glas bestehen. Die Prallbleche aus Metall besitzen eine hohe Wärmeleitfähigkeit, so daß ein thermisches Gleichgewicht in der Reaktionskammer einfacher eingestellt werden kann.

Aus Gründen der Einfachheit der Zuführung von Triphosgen in die Reaktionskammer ist der Vorratsbehälter in einer bevorzugten Ausführungsform zur Aufnahme von Triphosgen in Tablettenform ausgestaltet. Dabei kann die Befüllung des Vorratsbehälters gegebenenfalls mittels eines Tabletten-Magazins, z.B. in Form eines Röhrchens aus Glas oder Kunststoff, wie PTFE oder PFA, erfolgen. Auf diese Weise kann eine einfachere Befüllung ohne die Gefahr der Berührung mit Triphosgen durchgeführt werden.

Die Figuren 1 und 2 zeigen bevorzugte Ausführungsformen der erfindungsgemäß verwendeten Vorrichtung. Die Vorrichtung besteht aus einem gekapselten Gehäuse (17) aus geeignetem, inertem Kunststoff (z.B. Polytetrafluorethylen (PTFE) oder Perfluoralkoxypolymere (PFA)) oder Metall mit Kunststoff-(PTFE, PFA) oder Glaseinsatz oder -beschichtung (19). Der Vorratsbehälter (1) für Diphosgen und/oder Triphosgen (4) umfaßt einen verriegelbaren Verschlußdeckel (21) oder eine Verschlußschraube (23) auf der Oberseite und eine Dosiervorrichtung mit verschließbarer Durchtrittsöffnung (25) zur Reaktionskammer (5) für das Reaktionsmaterial. Der Verschluß (27) der Durchtrittsöffnung (25) kann z.B. eine Klappe, ein Schütz oder ein Schieber sein. Aufgrund der Gasentwicklung während der Umsetzung kann als Durchtrittsöffnung auch eine Druckschleuse verwendet werden, die einen höheren Druck in der Reaktionskammer gegenüber dem Vorratsbehälter erlaubt, ohne daß bei geöffneter Durchtrittsöffnung, z.B. bei Transport von Reaktionsmaterial aus dem Vorratsbehälter in die Reaktionskammer, Phosgen in den Vorratsbehälter gelangt.

Die Dosiervorrichtung kann ein einfacher Durchstoß (29) (insbesondere im Fall der Verwendung von Triphosgen in Tablettenform (2)) oder ein motorgetriebener Antrieb (31), wie z.B. ein Schneckenantrieb, sein.

Zur Vermeidung von Feuchtigkeit im Vorratsbehälter (1) ist eine Trockenpatrone (33) mit geeigneter Trockenmasse (z. B. Kieselgel) so in der Vorrichtung angebracht, daß sie mit dem sich über dem Reaktionsmaterial im Vorratsbehälter (1) befindlichen Gasraum im Gleichgewicht steht.

Der Katalysator (3) befindet sich in amorpher oder kristalliner Form in der Reaktionskammer (5), ist auf den Wänden der Reaktionskammer aufgetragen oder ist durch einen Träger immobilisiert.

Die Reaktionskammer ist mit einer Heizung (9) zur Erwärmung des Reaktionsgemisches ausgestattet. Direkt oberhalb des Reaktionsgemisches ist ein Sicherheitsventil (35) in der Reaktionskammer angebracht, welches über eine Gasleitung mit einem Abzug verbunden ist. Die Rücklaufeinrichtung ist in Form von Prallblechen (15) oder als Rückflußkühler (11) mit Wärmetauscher (13) ausgeführt. Am oberen Ende der Reaktionskammer (5) befindet sich ein Gasauslaßventil (7) für das produzierte Phosgen. Die Reaktionskammer kann nach Ablauf der Umsetzung mit Gas, z.B. einem Inertgas oder trockener Luft, gespült werden, wobei der Gasaustausch über das Sicherheitsventil (35) und das Gasauslaßventil (7) erfolgen kann.

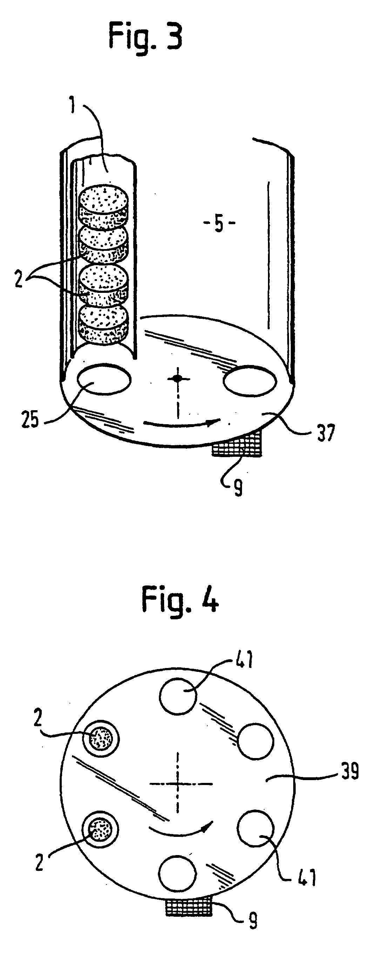

Die Figuren 3 und 4 zeigen schematisch spezielle Ausführungsformen der Dosiervorrichtung, mit der das Reaktionsmaterial in die Reaktionskammer überführt wird. In Figur 3 erfolgt die Zufuhr des tablettenförmigen Reaktionsmaterials (2) vom Vorratsbehälter (1) in die Reaktionskammer (4) nach dem "Revolverprinzip" mit einer drehbaren Scheibe (37) mit mindestens einer Durchtrittsöffnung (25), bevorzugt zwei oder mehr Öffnungen, zur Aufnahme einer Tablette (2). Durch Drehen der Scheibe (37) wird die Tablette in den Reaktionsraum (5) über die Heizung (9) befördert. Die Scheibe (37) funktioniert dabei gleichzeitig als Druckschleuse. In einer in Figur 4 als Aufsicht schematisch dargestellten Ausführungsform fungiert eine Scheibe (39) mit mehreren Öffnungen (41), die mit dem Reaktionsmaterial (2) in Tablettenform gefüllt sind, als vorkonfektionierter Vorratsbehälter zum Transport der Tabletten über die Heizung (9).

Der Vorratsbehälter kann z.B. in Form einer herkömmlichen Blisterverpackung für Tabletten ausgeführt sein. Bevorzugtes Material für die Scheiben (37) und (39) ist Kunststoff, z.b. PTFE oder PFA, oder Glas.

Um eine automatische Phosgenherstellung zu kontrollieren, kann eine elektronische Regelungsvorrichtung eingesetzt werden, die die Zufuhr von Reaktionsmaterial aus dem Vorratsbehälter, die Temperatur in der Reaktionskammer, die Rücklaufeinrichtung aus Rückflußkühler und Wärmetauscher und den Gasauslaß über ein Ventil anzeigt und reguliert.

Die folgenden Beispiele 1-21 sollen die Erfindung näher erläutern.

Die in den Beispielen verwendeten erfindungsgemäßen Katalysatoren sowie die Reaktionsbedingungen und -ergebnisse sind in den Tabellen 1 bis 3 zusammengefaßt.

Die Reaktionen werden in einem Zweihalskolben mit Rückflußkühler, der mit einer in einem Trockenrohr endenden Kühlfalle verbunden ist, durchgeführt. Die Umsetzungstemperatur wird durch ein Thermometer im zweiten Hals des Reaktionskolbens gemessen. Die Heizung des Reaktionskolbens erfolgt durch ein Ölbad mit Thermometer. Bei Volumenstrom-Messungen wird die Kühlfalle durch eine Gasbürette mit Eiswasser/Eis als Sperrflüssigkeit ersetzt.

Im Reaktionskolben wird das Triphosgen bzw. Diphosgen vorgelegt und bei einer Badtemperatur von 100°C erwärmt. Wenn das gesamte Reaktionsmaterial geschmolzen ist (für Triphosgen bei 80 bis 85°C), gibt man durch den mit dem Thermometer versehenen Hals den Katalysator auf einmal hinzu und verschließt den Kolben. Nach etwa 30 Sekunden bis 1 Minute tritt eine gleichmäßige Phosgenentwicklung ein, die konstant bis zum Ende der Reaktion weiterläuft. Die Badtemperatur wird auf den gewünschten Wert eingestellt, und während der Reaktion sublimiertes Triphosgen wird durch intermediär entstandenes und vom Phosgenstrom mitgerissenes (flüssiges) Diphosgen in den Sumpf zurückgespült. Die Reaktion ist beendet, wenn der Katalysator trocken zurückbleibt. Das in der Kühlfalle kondensierte Phosgen wird zur Ausbeutebestimmung gewogen.

Wird ein Versuch einmal oder mehrmals wiederholt, so gibt man das Triphosgen in den noch mit dem gebrauchten Katalysator versehenen Reaktionskolben, erwärmt das Gemisch in dem auf 100°C vorgeheizten Ölbad und verfährt weiter wie oben beschrieben.

Tabelle 1 zeigt die Phosgenentwicklung aus Triphosgen an Metallphthalocyaninen in Abhängigkeit von der Katalysatorkonzentration und der Bad- bzw. Umsetzungstemperatur. Im Fall des Beispiels Nr. 3 führt die erneute Zugabe von 100 g Triphosgen zum vorher verwendeten Katalysator zum gleichen Ergebnis, was zeigt, daß der Katalysator über einen längeren Zeitraum in der Reaktion stabil ist. Auch das nachfolgend dargestellte immobilisierte Polyacrylsäure-tetraethylenglykol-cobaltphthalocyanin (PAS-TEG-PcCo) katalysiert die Umsetzungsreaktion des Triphosgens schon in geringer Konzentration (s. Bsp. 6a):

Tabelle 2 zeigt am Beispiel des Volumenstroms des durch Umsetzung von Triphosgen an Chloraluminiumphthalocyanins entwickelten Phosgens die Steuerbarkeit des erfindungsgemäßen Verfahrens durch Regulierung von Umsetzungstemperatur und Katalysatormenge.

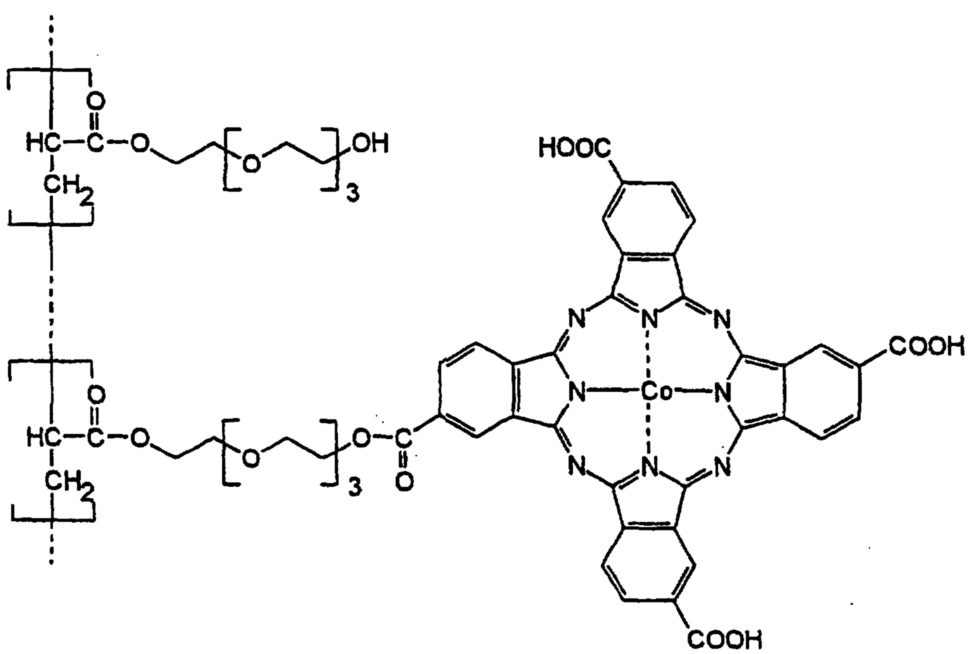

Tabelle 3 zeigt die Phosgenentwicklung aus Triphosgen an weiteren Katalysatoren mit Imin- und Amin-Funktion in

Abhängigkeit von der Katalysatorkonzentration. Auch in diesen Fällen werden annähernd 100%-ige Phosgenausbeuten erhalten. Ebenfalls führt eine erneute zweimalige Zugabe von 10g Triphosgen zum Katalysator in Beispiel Nr. 17 zum gleichen Ausbeuteergebnis, was ebenfalls die Katalysatorstabilität belegt. Immobilisierte Katalysatoren sind in den Beispielen 15, 16, 16a sowie 20 und 21 dargestellt, wobei die Beispiele 20 und 21 als Katalysator eine Verbindung verwenden, die eine Amin-Funktion mit desaktiviertem freiem Elektronenpaar enthält.

Die Umsetzung von Diphosgen zu Phosgen an Chloraluminiumphthalocyanin (Bsp. 19) erfolgt bereits ab 50°C und ist ca. viermal so schnell wie bei Verwendung von Triphosgen als Ausgangsmaterial. Da Diphosgen bei der Umsetzung von Triphosgen zu Phosgen auftritt, folgt, daß der Zerfallsschritt von Triphosgen zu Diphosgen geschwindigkeitsbestimmend ist:

$$(COCl_2)_3 \xrightarrow{k_1} (COCl_2)_2 + COCl_2 \xrightarrow{k_2} 3\ COCl_2\ ;\ k_2 >> k_1$$

Dies folgt auch aus der Tatsache, daß bei vielen erfindungsgemäßen Katalysatoren beim Entziehen der Energiezufuhr (Abkühlenlassen) aus dem Reaktionsgemisch aus Triphosgen, Diphosgen und Katalysator Triphosgen auskristallisiert, während Diphosgen weiter zersetzt wird, bis ein völlig trockener Rückstand aus Triphosgen und Katalysator zurückbleibt, der gefahrlos aufbewahrt werden kann.

Durch erneutes Aufheizen des Reaktionsgemisches aus Triphosgen und Katalysator kann die Phosgenentwicklung wieder gestartet und fortgesetzt werden. Dieser Vorgang kann mehrmals wiederholt werden, so daß ein sicherer und steuerbarer Phosgen-Generator zur Verfügung steht. Die Cyclenfestigkeit der Katalysatoren wurde durch die oben erwähnten Versuche 3 und 17 mit gebrauchten Katalysatoren demonstriert.

Die Katalysatoraktivität läßt sich speziell in den Metallphthalocyaninen über die Auswahl des Metallatoms voreinstellen, während die genauere Umsetzungsgeschwindigkeit über die Temperatur und gegebenenfalls die Katalysatorkonzentration erfolgen kann.

Neben den genannten Vorteilen, insbesondere der Steuerbarkeit der Reaktion, werden bei der Durchführung der Beispiele weitere Vorteile des erfindungsgemäßen Verfahrens ersichtlich: nach Zugabe des Katalysators in die Schmelze von Triphosgen folgt eine Latenzperiode von 0,5 bis 1 min., während der kein Phosgen entweicht und somit keine lokalen Überdrücke entstehen können. Daher kann das Reaktionsgefäß vor der Reaktion ohne spezielle Abdichtungsmechanismen geöffnet, der Katalysator zur Schmelze hinzugegeben und das Gefäß wieder verschlossen werden. Weiterhin erfolgt die Phosgenentwicklung über die gesamte Reaktionsdauer in konstanter Weise, und weder in der Anfangs- noch in der Schlußphase erfolgt eine plötzliche Änderung der Bildungsgeschwindigkeit des Phosgens.

Auch bei höheren Umsetzungstemperaturen läuft die Reaktion annähernd stöchiometrisch ab, und es entstehen keine Nebenprodukte. Darüber hinaus kann das Verfahren als selbstregulierende Reaktion durchgeführt werden, wenn das am Kühlkopf niedergeschlagene Diphosgen (zusammen mit resublimiertem Triphosgen) in das Reaktionsgemisch zurückläuft und dessen Temperatur reduziert. So geben die Beispiele 3a, 7a und 16a das Temperaturprofil der Reaktion wider: Bei allen drei Reaktionen liegt die Umsetzungstemperatur bis zu einer Badtemperatur von 135°C um 10°C darunter. Bei einer Badtemperatur darüber bis zu ca. 180°C bleibt die Umsetzungstemperatur bei den schnellen Reaktionen (Beispiele 3a und 16a) bedingt durch den stärkeren Diphosgenrücklauf bei ca. 125°C stehen, bei der langsamen Reaktion (Beispiel 7a) nimmt die Umsetzungstemperatur bei 145°C einen konstanten Wert an.

Die vorliegende Erfindung stellt somit ein Verfahren zur Verfügung, mit dem in steuerbarer und kontrollierter Weise Phosgen aus den sicher handhabbaren Ersatzstoffen (Vorstufen) Diphosgen und Triphosgen hergestellt werden kann, ebenso wie eine Vorrichtung zur schnellen und einfachen Herstellung von Phosgen aus den genannten Ersatzstoffen.

Tabelle 1:

| Bsp. Nr. | Katalysator | Triphosgen-menge [g] | Katalysator-konz. [mol%] | Badtemp. [°C] | Umsetzungs-temp. [°C] | Reaktions-zeit [min] | Phosgen-ausbeute [%] |
|---|---|---|---|---|---|---|---|
| 1 | α-CuPc | 10 | 1 | 100 | 90 | 5 | 96 |
| 2 | α-CuPc | 10 | 0,2 | 115 | 105 | 25 | 98 |
| 3 | α-CuPc | 100 | 0,2 | 100 | 90 | 35 | 99-100 (1) |
| 3a | α-CuPc | 50 | 0,2 | 100-165 | 90-125 | - | 100 |
| 4 | β-CuPc | 10 | 2 | 115 | 105 | 1200 | 99 |
| 5 | FePc | 10 | 2 | 115 | 105 | 1200 | 99 |
| 5a | MoPc | 10 | 1 | 115 | 105 | 90 | 94 |
| 6 | CoPc | 10 | 2 | 100 | 90 | 15 | 99 |
| 6a | PAS-TEG-PcCo (2) | 10 | 0,1 | 115 | 105 | 14 | 100 |
| 7 | ClAlPc | 100 | 2 | 115 | 105 | 300 | 99 |
| 7a | ClAlPc | 50 | 2 | 105-175 | 95-145 | - | 96 |
| 8 | ClAlPc | 1000 | 2 | 115 | 105 | 300 | 99 |
| 8a | OVPc | 10 | 1 | 115 | 105 | 120 | 96 |

(1): Die erneute Zugabe von 100 g Triphosgen führt zu den gleichen Ergebnissen

(2): Polyacrylsäure-tetraethylenglykol-cobaltphthalocyanin

Tabelle 2:

| Beispiel Nr. | Triphosgen-menge [g] | Katalysator-konz. [mol%] | Badtemp. (°C) | Volumenstrom Phosgen [ml/min] |
|---|---|---|---|---|
| 9 | 10 | 1 | 95 | 3,7 |
| 10 | 10 | 2 | 100 | 6,3 |
| 11 | 10 | 2 | 110 | 11,5 |
| 12 | 10 | 2 | 125 | 44,8 |
| 13 | 10 | 10 | 100 | 95,5 |

Tabelle 3:

| Bsp. Nr. | Katalysator | Triphosgen-menge [g] | Katalysator-konz. [mol%] | Badtemp. [°C] | Umsetzungs-temp. [°C] | Reaktions-zeit [min] | Phosgen-ausbeute [%] |
|---|---|---|---|---|---|---|---|
| 14 | $H_2Pc$ | 10 | 1 | 100 | 90 | 4 | 97 |
| 15 | Poly-(2-vinylpyridin) | 10 | 1 | 100 | 90 | 5 | 96 |
| 16 | Poly-(2-vinylpyridin) | 10 | 0,1 | 100 | 90 | 60 | 98 |
| 16a | Poly-(2-vinylpyridin) | 50 | 0,1 | 100-130<br>130-155 | 90-120<br>120-125 | - | 99 |
| 17 | Phenanthridin | 10 | 0,1 | 115 | 95 | 21 | 98-99[1] |
| 18 | Phenanthridin | 100 | 0,1 | 115 | 95 | 30 | 100 |
| 19 | ClAlPc | 10 (Diphosgen) | 2 | 80 | - | 90 | 96 |
| 20 | DMAMPS[2] | 10 | 1 | 110 | 100 | 6 | 100 |
| 21 | DMAMPS[2] | 10 | 0,1 | 115 | 105 | 25 | 100 |

([1]): Die zweimalige Zugabe von 10 g Triphosgen führt zu den gleichen Ergebnissen

([2]): N,N-Dimethylaminomethylpolystyrol

## Patentansprüche

1. Verfahren zur Herstellung von Phosgen aus Diphosgen und/oder Triphosgen durch Umsetzung an einem Katalysator, **dadurch gekennzeichnet, daß** der Katalysator ein oder mehrere Verbindungen mit ein oder mehreren Stickstoffatomen mit desaktiviertem freien Elektronenpaar umfaßt.

2. Verfahren gemäß Anspruch 1, **dadurch gekennzeichnet, daß** das freie Elektronenpaar durch Mesomerie und/oder eine oder mehrere elektronenziehende und/oder raumfüllende Gruppen in Nachbarschaft zum Stickstoffatom desaktiviert sind.

3. Verfahren gemäß Anspruch 1 oder 2, **dadurch gekennzeichnet, daß** die Verbindungen mit Stickstoffatom mit desaktiviertem freien Elektronenpaar ausgewählt sind aus Verbindungen mit desaktivierter Imin-Funktion und/oder desaktivierter Amin-Funktion.

4. Verfahren gemäß Anspruch 3, **dadurch gekennzeichnet, daß** die Verbindung mit desaktivierter Imin-Funktion und/oder desaktivierter Amin-Funktion durch Bindung an Polymere immobilisiert ist.

5. Verfahren gemäß Anspruch 3 oder 4, **dadurch gekennzeichnet, daß** die Verbindung mit desaktivierter Imin-Funktion ausgewählt ist aus Poly(2-vinylpyridin), Phenanthridin, Phthalocyanin und Metallphthalocyaninen.

6. Verfahren gemäß Anspruch 5, **dadurch gekennzeichnet, daß** das Phthalocyanin oder Metallphthalocyanin ein- oder mehrfach an den Benzo-Gruppen substituiert ist.

7. Verfahren gemäß Anspruch 6, **dadurch gekennzeichnet, daß** die Substituenten der Benzo-Gruppen des Phthalocyanins oder Metallphthalocyanins ausgewählt sind aus Alkyl, Cycloalkyl, Aryl, Halogen, Nitro, Amino, Cyano, Carboxy, Carbalkoxy, Carboxamido, Phthalocyanin und anellierten cyclischen oder heterocyclischen Gruppen, die gegebenenfalls selbst substituiert sind.

8. Verfahren gemäß Anspruch 3, **dadurch gekennzeichnet, daß** die Verbindung mit desaktivierter Amin-Funktion eine desaktivierte tertiäre Aminverbindung ist.

9. Verfahren gemäß einem der vorhergehenden Ansprüche, **dadurch gekennzeichnet, daß** die Katalysatorkonzentration 0,01-10 mol-% beträgt, insbesondere 0,1-2 mol-%, bezogen auf die Menge an Diphosgen und/oder Triphosgen.

10. Verfahren gemäß einem der vorhergehenden Ansprüche, **dadurch gekennzeichnet, daß** das Diphosgen und/oder Triphosgen im flüssigen Zustand vorliegt.

11. Verfahren gemäß einem der vorhergehenden Ansprüche, **dadurch gekennzeichnet, daß** die Umsetzungstemperatur 80 bis 150°C beträgt.

12. Verwendung einer Vorrichtung zur Durchführung des Verfahrens zur Phosgen-Herstellung aus Diphosgen und/oder Triphosgen gemäß einem der Ansprüche 1 bis 11, wobei die Vorrichtung einen Vorratsbehälter (1) für Diphosgen und/oder Triphosgen und eine mit dem Vorratsbehälter (1) verbundene und den Katalysator (3) enthaltende Reaktionskammer (5) mit Phosgenauslass (7) umfaßt.

13. Verwendung gemäß Anspruch 12, worin die Reaktionskammer (5) mit einer gegebenenfalls elektronisch. regelbaren Heizung (9) ausgestattet ist.

14. Verwendung gemäß Anspruch 12 oder 13, worin die Reaktionskammer (5) mit einer in die Reaktionskammer mündenden Rücklaufeinrichtung ausgestattet ist.

15. Verwendung gemäß Anspruch 14, worin die Rücklaufeinrichtung ein Rückflußkühler (11) mit außerhalb der Vorrichtung angebrachtem Wärmetauscher (13) oder geneigte Prallbleche (15) sind.

16. Verwendung gemäß Anspruch 15, worin die Prallbleche (15) aus beschichtetem Metall bestehen.

17. Verwendung gemäß einem der Ansprüche 12 bis 16, worin der Vorratsbehälter (1) zur Aufnahme von Triphosgen

in Tablettenform ausgestaltet ist.

**Claims**

1. Method for producing phosgene from diphosgene and/or triphosgene by converting on a catalytic converter, **characterised in that** the catalytic converter comprises one or more compounds with one or more nitrogen atoms with a deactivated lone pair of electrons.

2. Method according to Claim 1, **characterised in that** the lone pair of electrons are deactivated by mesomerism and/or one or more electron-drawing and/or space factor groups in the vicinity of the nitrogen atom.

3. Method according to Claim 1 or 2, **characterised in that** the compounds with nitrogen atom with a deactivated lone pair of electrons are selected from compounds with a deactivated imine function and/or deactivated amine function.

4. Method according to Claim 3, **characterised in that** the compound with deactivated imine function and/or deactivated amine function is immobilised by binding to polymers.

5. Method according to Claim 3 or 4, **characterised in that** the compound with deactivated imine function is selected from poly (2-vinyl pyridine), phenanthridine, phthalocyanine and metal phthalocyanines.

6. Method according to Claim 5, **characterised in that** the phthalocyanine or metal phthalocyanine is substituted singly or multiply on the benzo groups.

7. Method according to Claim 6, **characterised in that** the substituents of the benzo groups of the phthalocyanine or metal phthalocyanine are selected from alkyl, cycloalkyl, aryl, halogen, nitro, amino, cyano, carboxy, carbalkoxy, carboxymido, phtalocyanine and anellated cyclic or heterocyclic groups, which are optionally substituted themselves.

8. Method according to Claim 3, **characterised in that** the compound with deactivated amine function is a deactivated tertiary amine compound.

9. Method according to one of the preceding claims, **characterised in that** the catalytic converter concentration is 0.01-10 mol%, in particular 0.1-2 mol%, related to the amount of diphosgene and/or triphosgene.

10. Method according to one of the preceding claims, **characterised in that** the diphosgene and/or triphosgene is in a liquid state.

11. Method according to one of the preceding claims, **characterised in that** the conversion temperature is 80 to 150°C.

12. Use of a device for carrying out the method for producing phosgene from diphosgene and/or triphosgene according to one of claims 1 to 11, wherein the device comprises a store tank (1) for diphosgene and/or triphosgene and a reaction chamber (5) connected to the store tank (1), containing the catalytic converter (3) and with phosgene outlet (7).

13. Use according to Claim 12, in which the reaction chamber (5) is fitted with heating (9) which is optionally electronically controllable.

14. Use according to Claim 12 or 13, in which the reaction chamber (5) is fitted with a return device ending in the reaction chamber.

15. Use according to Claim 14, in which the return device is a recycling cooler (11) with heat exchangers (13) attached outside the device or inclined baffle plates (15).

16. Use according to Claim 15, in which the baffle plates (15) consist of coated metal.

17. Use according to one of Claims 12 to 16, in which the store tank (1) is constructed to accomodate triphosgene in

tablet form.

## Revendications

1. Procédé pour la préparation de phosgène à partir de diphosgène et/ou de triphosgène par réaction sur un catalyseur, **caractérisé par le fait que** le catalyseur comprend un ou plusieurs composés avec un ou plusieurs atomes d'azote avec une paire d'électrons libres désactivée.

2. Procédé selon la revendication 1, **caractérisé par le fait que** la paire libre d'électrons est désactivée par mésomérie et/ou par un ou plusieurs groupes électro-attracteurs et/ou encombrant au voisinage de l'atome d'azote.

3. Procédé selon l'une des revendications 1 ou 2, **caractérisé par le fait que** les composés ayant un atome d'azote avec une paire d'électrons désactivée sont choisis parmi les composés avec une fonction imine désactivée et/ou une fonction amine désactivée.

4. Procédé selon la revendication 3, **caractérisé par le fait que** les composés avec une fonction imine désactivée et/ou une fonction amine désactivée sont immobilisés par liaison avec un polymère.

5. Procédé selon l'une des revendications 3 ou 4, **caractérisé par le fait que** les composés avec une fonction imine désactivée sont choisis parmi poly(2-vinylpiridine),phénanthridine, phthalocyanine et les métallophthalocyanines.

6. Procédé selon la revendication 5, **caractérisé par le fait que** la phthalocyanine ou la métallophthalocyanine est substituée une ou plusieurs fois sur l'entité benzo.

7. Procédé selon la revendication 6, **caractérisé par le fait que** les substituents de l'entité benzo de la phthalocyanine ou de la métallophthalocyanine sont choisis parmi alkyle, cycloalkyle, aryle, halogène, nitro, amino, cyano, carboxy, carboalkoxy, carboxamido, phthalocyanine et les groupes annelés, cycliques ou hétérocycliques, qui sont eux mêmes substitués le cas échéant.

8. Procédé selon la revendication 3, **caractérisé par le fait que** le composé avec une fonction amine désactivée est un composé d'amine tertiaire désactivée.

9. Procédé selon l'une des revendications précédentes, **caractérisé par le fait que** la concentration de catalyseur est de 0,01 à 10 moles %, en particulier de 0,1 à 2 moles % par rapport à la quantité de diphosgène et/ou de triphosgène.

10. Procédé selon l'une des revendications précédentes, **caractérisé par le fait que** le diphosgène et/ou le triphosgène se trouvent à l'état liquide.

11. Procédé selon l'une des revendications précédentes, **caractérisé par le fait que** la température de réaction est de 80 à 150°C.

12. Utilisation d'un dispositif pour la mise en oeuvre du procédé pour la préparation de phosgène à partir de diphosgène et/ou de triphosgène selon l'une des revendications 1 à 11, dans lequel le dispositif comprend un réservoir de stockage (1) pour le diphosgène et/ou le triphosgène et une chambre de réaction (5), contenant le catalyseur (3), en communication avec le réservoir de stockage (1), et ayant un déversoir à phosgène (7).

13. Utilisation selon la revendication 12 dans laquelle la chambre de réaction (5) est équipée d'un chauffage (9), le cas échéant réglable électroniquement.

14. Utilisation selon la revendication 12 ou 13, dans laquelle la chambre de réaction (5) est équipée d'un mécanisme de reflux débouchant sur la chambre de réaction.

15. Utilisation selon la revendication 14, dans laquelle le mécanisme à reflux est un condenseur à reflux (11) avec, à l'extérieur du dispositif, un échangeur thermique adapté (13) ou des chicanes plates penchées (15).

16. Utilisation selon la revendication 15, dans laquelle les chicanes plates sont en métal plaqué.

**17.** Utilisation selon l'une des revendications 12 à 16, dans laquelle le réservoir de stockage (1) est adapté pour contenir le triphosgène sous forme de comprimé.

Fig. 1

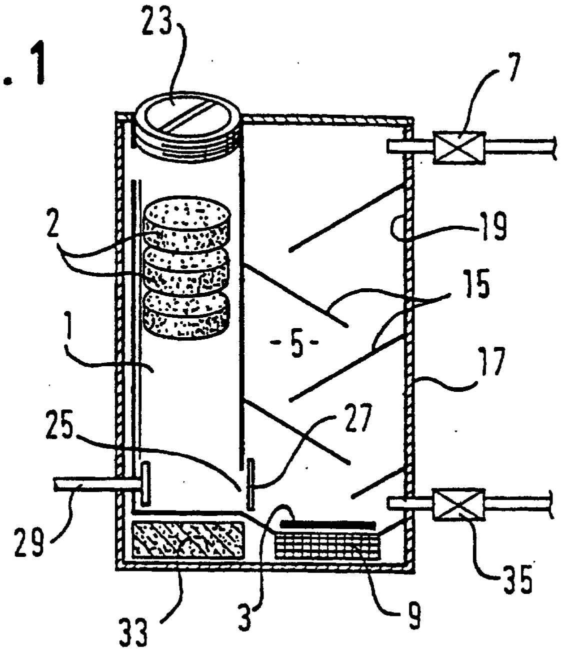
23
7
19
2
15
1
- 5 -
17
25
27
29
35
33
3
9

Fig, 2

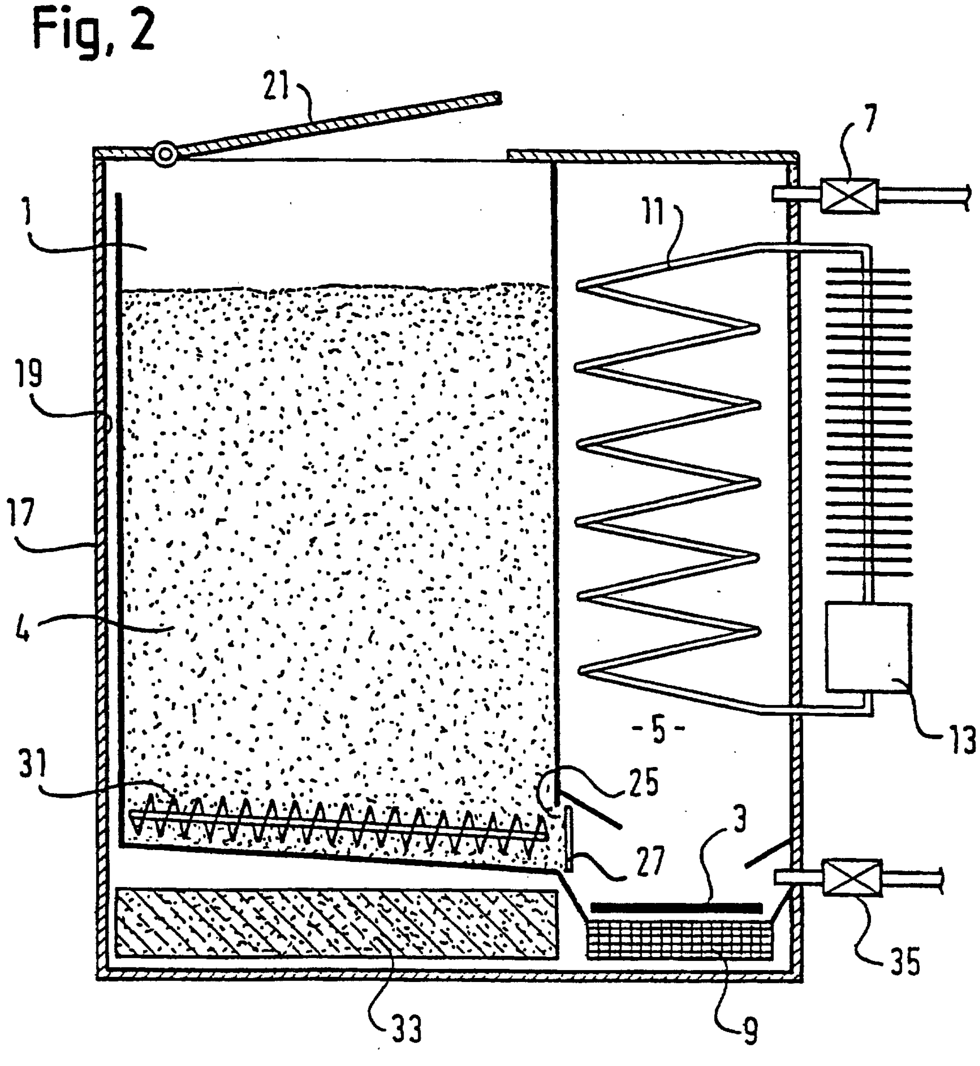
21
7
1
11
19
17
4
13
- 5 -
31
25
3
27
35
33
9

Fig. 3

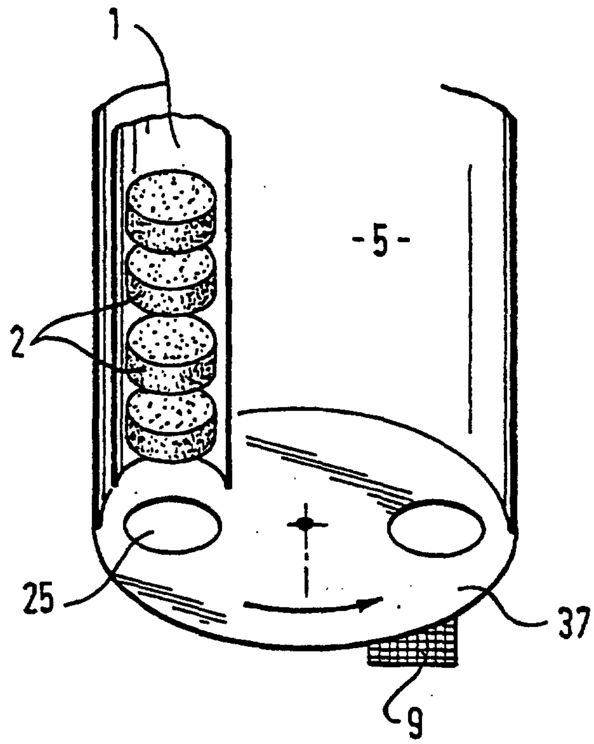


Fig. 4